# EUROPÄISCHE PATENTSCHRIFT

(11) **EP 1 721 381 B1**
(45) Veröffentlichungstag und Bekanntmachung des Hinweises auf die Patenterteilung: **10.07.2013**
(21) Anmeldenummer: 05706915.5
(22) Anmeldetag: 18.01.2005
(51) Int. Cl.: H02M 7/538, H05B 41/285

(54) **ÜBERSTROM UND MITTENPUNKTSPANNUNGSERFASSUNG**
OVERCURRENT AND MIDDLE POINT VOLTAGE DETECTION
DETECTION DE SURINTENSITE DE COURANT ET DE TENSION EN UN POINT CENTRAL

(30) Priorität: 01.03.2004 DE 102004009994
(43) Veröffentlichungstag der Anmeldung: 15.11.2006
(60) Teilanmeldung: 10183752.4
(73) Patentinhaber: Tridonic GmbH & Co KG, 6851 Dornbirn (AT)
(72) Erfinder: KLIEN, Dieter, A-6841 Mäder (AT)
(74) Vertreter: Rupp, Christian
(86) Internationale Anmeldenummer: PCT/EP2005/000451
(87) Internationale Veröffentlichungsnummer: WO 2005/083872

(56) Entgegenhaltungen:
- US-A1- 2004 007 992

## Beschreibung

Die vorliegende Erfindung bezieht sich auf Wechselrichter mit Halbbrückenschaltungen, auf ein elektronisches Vorschaltgerät (EVG) für Gasentladungslampen mit einem derartigen Wechselrichter, auf Verfahren zur Überwachung des Zustands eines Wechselrichters mit einer Halbbrückenschaltung sowie auf ein Computersoftware-Programmprodukt, das derartige Verfahren unterstützt, wenn es durch einen Mikrocomputer ausgeführt wird.

Hintergrund der vorliegenden Erfindung ist beispielsweise das Anwendungsgebiet elektronischer Vorschaltgeräte. Derartige elektronische Vorschaltgeräte sind aus dem Stand der Technik gut bekannt und weisen üblicherweise einen mit Netzspannung versorgten Gleichrichter mit PFC (Power Factor Correction, Leistungsfaktor-Korrekturschaltung) auf. Die von dieser Einheit erzeugte Gleichspannung wird dann einer hochfrequent getakteten Halbbrücke zugeführt, die eine hochfrequente Wechselspannung erzeugt, die wiederum wenigstens einer angeschlossenen Gasentladungslampe zugeführt wird. Die Halbbrückenschaltung weist dabei in der Regel zwei in Serie geschaltete Schalter wie beispielsweise Leistungstransistoren auf, die von einer Steuereinheit, wie beispielsweise einem ASIC, getaktet sind.

Bei den Schaltvorgängen dieser Leistungstransistoren der Halbbrücke ist darauf zu achten, dass ein sogenanntes 'hartes Schalten' vermieden wird. 'Hartes Schalten' bedeutet dabei, dass während der Freilaufphase des Stroms durch die Halbbrücke durch die Freilaufdiode (parallel zum Schalter und ggf. und in diesen integriert) der gegenüberliegende Schalter eingeschaltet wird. Dabei kann es zu Beschädigungen des Schalters kommen.

Aus dem Stand der Technik sind dabei Ansätze bekannt, nach dem Auftreten eines solchen harten Schaltvorgangs die Halbbrücke zu deaktivieren.

Andererseits ist es aber auch beispielsweise aus der WO 00/35252 (siehe dort Fig. 14) bekannt, den Zustand der Halbbrückenschaltung und genauer gesagt die Spannung an dem Mittelpunkt zwischen den beiden Schaltern zu überwachen, wobei dabei der entsprechende Transistor erst dann eingeschaltet wird, wenn die Freilaufphase abgeschlossen ist. Nachteil dieser Schaltung ist es indessen, dass zur Überwachung dieser Mittenpunktspannung an einer Steuereinheit, beispielsweise an derselben Steuereinheit, die auch die Schalter ansteuert, ein zusätzlicher Pin einer integrierten Schaltung belegt wird.

Ausgehend von diesem Stand der Technik ist es daher Aufgabe der vorliegenden Erfindung, eine effektiver gestaltete Überwachungs- und Ansteuerschaltung für eine Halbbrücke vorzuschlagen.

Diese Aufgabe wird erfindungsgemäß durch die Merkmale der unabhängigen Ansprüche gelöst. Die abhängigen Ansprüche bilden den zentralen Gedanken der vorliegenden Erfindung in besonders vorteilhafter Weise weiter.

US 2004/0007992 Zeigt einen Wechselrichter gemäß dem Oberbegriff des Anspruchs 1. Gemäß diesem Stand der Technik wird dabei ermöglicht, dass der zur Überwachung der Mittenpunktspannung der Halbbrücke erforderliche Pin einer integrierten Schaltung gleichzeitig auch zur Überwachung des Stroms der Halbbrücke verwendet werden kann. Erfindungsgemäß wird dabei die Überwachungsschaltung derart ausgebildet, dass einerseits in einer Phase der Taktung der Schalter das Meßsignal an einem Pin der integrierten Schaltung als Mittenpunktspannung verwendet wird. In einer zeitlich davon getrennten Phase der Taktung der Schalter (Leistungstransistoren) kann andererseits derselbe Pin zur Bestimmung des Halbbrückenstroms verwendet werden. Der Strom durch die Halbbrücke kann dabei bspw. zur Erfassung eines Überstrom-Zustands und zur Lampenleistungsregelung verwendet werden.

Gemäß einem ersten Aspekt der vorliegenden Erfindung wird daher ein Wechselrichter mit einer Halbbrückenschaltung vorgeschlagen, die zwei in Serie geschaltete und mit Gleichspannung versorgte Schalter aufweist, an deren Mittenpunkt bei entsprechender gegenläufiger Taktung der Schaltung eine Wechselspannung bereitgestellt wird. Weiterhin ist eine Steuereinheit vorgesehen, die die Schalter taktet und ein an dem Mittenpunkt abgegriffenes Meßsignal in unterschiedlichen zeitlichen Phasen der Taktung der Schalter zur Erfassung des Stroms durch die Halbbrücke bzw. zur Erfassung der Spannung an den Mittenpunkt auswertet. Der potentialniedrigere Schalter ist mittels eines Ohm'schen Messwiderstands mit Masse verbunden, dessen Widerstandswert wesentlich kleiner als der Widerstand des potentialniedrigeren Schalters im geschlossenen Zustand ist und ein weiterer ohm'scher Widerstand parallel zu dem potentialniedrigeren Schalter geschaltet ist, und das Mittenpunktsignal an einem Punkt zwischen dem Messwiderstand und dem potentialniedrigeren Schalter abgegriffen wird.

Die Steuereinheit kann dabei das Mittenpunktsignal als Strom durch die Halbbrücke auswerten, wenn nur der auf niedrigen Potential liegende Schalter der Halbbrücke geschlossen ist.

Andererseits kann die Steuereinheit das Mittenpunktsignal als Spannungswert des Mittenpunkts in einer zeitlichen Phase der Taktung der Schalter auswerten, in der wenigstens der auf niedrigerem Potential liegende Schalter geöffnet ist. Insbesondere kann die Steuereinheit das Mittenpunktsignal dabei als Spannungswert des Mittenpunkts während einer Totzeit auswerten, in der beide Schalter geöffnet sind.

Die Totzeit kann dabei durch die Steuereinheit abhängig von der erfassten Mittenpunktspannung variierbar, insbesondere von einer Standardeinstellung ausgehend verlängerbar sein.

Ein Komparator zum Vergleich des Meßsignals mit einer Referenzspannung kann vorgesehen sein, wobei dann das Ergebnis des Vergleichs der Steuereinheit zur weiteren Auswertung zugeführt wird.

Die Steuereinheit kann beispielsweise ein ASIC sein.

Die Steuereinheit kann einen Schalter erst dann einschalten, wenn die Erfassung der Mittenpunktspannung ergeben hat, dass die Freilaufphase des Halbbrückenstroms beendet ist und somit ein spannungsloser Schaltvorgang gewährleistet ist.

Gemäß einem weiteren Aspekt der vorliegenden Erfindung ist ein elektronisches Vorschaltgerät für Gasentladungslampen mit einem derartigen Wechselrichter vorgesehen.

Schließlich bezieht sich die Erfindung auch auf Verfahren zur Überwachung des Zustands eines Wechselrichters mit einer Halbbrückenschaltung, die zwei in Serie geschaltete und mit Gleichspannung versorgte Schalter aufweist, an deren Mittenpunkt bei entsprechender gegenläufiger Taktung der Schalter eine Wechselspannung bereitgestellt wird, wobei ein an dem Mittenpunkt abgegriffenes Messignal in unterschiedlichen zeitlichen Phasen der Taktung der Schalter zur Erfassung des Stroms durch die Halbbrücke bzw. der Spannung an dem Mittenpunkt ausgewertet wird, wobei gekennzeichnet dadurch, dass der potentialniedrigere Schalter mittels eines Ohm'schen Messwiderstands mit Masse verbunden ist, dessen Widerstandswert wesentlich kleiner als der Schalterwiderstand im geschlossenen Zustand ist, und ein weiterer Ohm'scher Widerstand parallel zu dem potentialniedrigeren Schalter geschaltet ist, und das Mittenpunktsignal an einem Punkt zwischen dem Messwiderstand und dem potentialniedrigeren Schalter abgriffen wird.

Weitere Merkmale, Vorteile und Eigenschaften der vorliegenden Erfindungs sollen nunmehr Bezug nehmend auf die begleitenden Figuren und durch detaillierte Beschreibung unterschiedlicher Ausführungsbeispiele der vorliegenden Erfindung näher erläutert werden.
- Fig. 1a: zeigt dabei ein erstes Ausführungsbeispiel der Erfindung in dem Zustand, in dem während einer sogenannten Totzeit eine Mittenpunktspannungsmessung erfolgt,
- Fig. 1b: zeigt den Zustand des ersten Ausführungsbeispiels während einer Messung des Stroms durch die Halbbrücke,
- Fig. 2a: zeigt ein zweites Beispiel der vorliegenden Erfindung in dem Zustand, in dem während der Totzeit die Spannung an dem Mittenpunkt gemessen wird, und
- Fig. 2b: zeigt wiederum das zweite Beispiel in dem Zustand in dem der Strom durch die Halbbrücke gemessen wird.

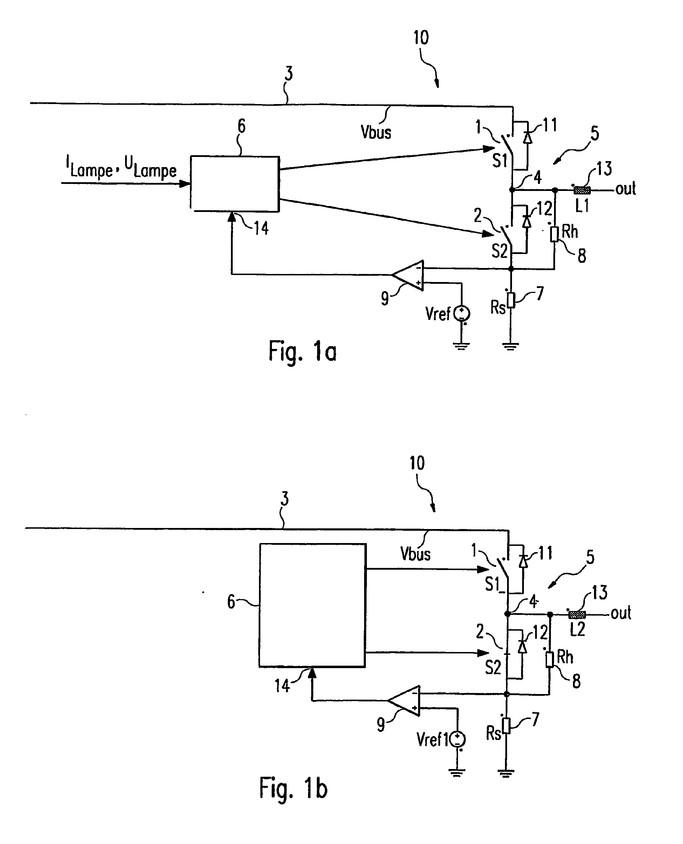

Fig. 1a zeigt ein erstes Ausführungsbeispiel der Erfindung mit einem Wechselrichter 10 mit einer Halbbrückenschaltung 5, der eine DC-Busspannung 3 zugeführt wird. Die Halbbrückenschaltung 5 weist zwei Leistungsschalter 1, 2 mit jeweils dazu parallel geschalteten Freilaufdioden 11 bzw. 12 auf. Diese Freilaufdioden 11, 12 können auch in die Schalter (Transistoren) 1, 2 integriert sein. Durch entsprechende (hochfrequente) Taktung der Schalter 1, 2 durch eine Steuereinheit 6 wird an dem Mittenpunkt 4 der Halbbrückenschaltung 5 eine (hochfrequente) Wechselspannung bereitgestellt, die beispielsweise einer Drossel 13 eines folgenden Lastkreises zugeführt wird, wobei dieser Lastkreis üblicherweise die Lampe enthält.

Aufgabe einer an diese Halbbrückenschaltung 5 angeschlossenen Überwachungsschaltung ist es einerseits ein sogenanntes hartes Schaltes, d.h. ein nicht spannungsloses Schalten der Transistoren 1, 2 zu vermeiden. Die Schalter werden spannungslos geschaltet, wenn die Freilaufdioden 11, 12 im induktiven Betriebsbereich der Halbbrückenschaltung leitfähig werden, bevor die Schalter eingeschaltet werden.

Dies ist der Fall, wenn Resonanzkurve des Lastkreises ein induktives Verhalten zeigt. Dagegen ist diese Bedingung nicht mehr erfüllt, wenn der Lastkreis ein kapazitives Verhalten zeigt.

Die Mittenpunktspannung wird in der zeitlichen Phase der Taktung der Schalter 1, 2 gemessen, in der zumindest der potentialniedrigere Schalter 2 offen ist. Insbesondere kann aber diese Mittenpunkt-Spannungsmessung während der Totzeit durchgeführt werden, während der also beide Schalter 1, 2 geöffnet sind.

Gemäß der Erfindung weist die Überwachungsschaltung dabei einen ersten Ohm'schen Widerstand 8 auf, der parallel zu dem potentialniedrigeren Schalter 2 geschaltet ist. Dieser erste Ohm'sche Widerstand 8 bildet mit einem Ohm'schen Meßwiderstand 7, der den potentialniedrigeren Schalter 2 mit Masse verbindet, einen Spannungsteiler. Das Spannungsteilersignal wird dann einem Komparator 9 zugeführt, der das Spannungsteilersignal mit einer vorgegebenen Referenzspannung V_{ref} vergleicht und das Vergleichssignal der Steuereinheit 6 zuführt.

Da die Steuereinheit 6 die zeitliche Taktung der Schalter 1, 2 vorgibt, kann ein eingehendes Meßsignal an dem Pin 14 eindeutig der Totzeitphase zugeordnet werden.

Anzumerken ist, dass der Widerstandswert des Ohm'schen Meßwiderstands 7 deutlich kleiner als der Schalterwiderstand des potentialniedrigeren Schalters 2 im geschlossenen Zustand (eingeschalteten Zustand) ist und beispielsweise einige mOhm betragen kann.

Während also die Mittenpunktspannungsmessung bevorzugt während der zeitlichen Dauer der Totzeit erfolgt, erfolgt die Messung des Halbbrückenstroms wie aus Fig. 1b ersichtlich dann, wenn der potentialniedrigere Schalter 2 wie durch die Steuerschaltung 6 vorgegeben, geschlossen ist. In diesem Zustand, in dem die Mittenpunktspannung etwa 0,7 Volt beträgt, wird also der Halbbrückenstrom mittels der an dem Meßwiderstand 7 anliegenden Spannung gemessen und wiederum dem Komparator 9 zugeführt.

Festzuhalten ist, dass die gleiche Schaltung in Fig. 1a und Fig. 1b unter Verwendung ein- und desselben Pins 14 der Schaltung 6 einerseits die Mittenpunktspannungsmessung in einer ersten zeitlichen Phase der Taktung der Schalter 1, 2, und andererseits die Messung des Stroms durch die Halbleiterbrücke ausführen kann.

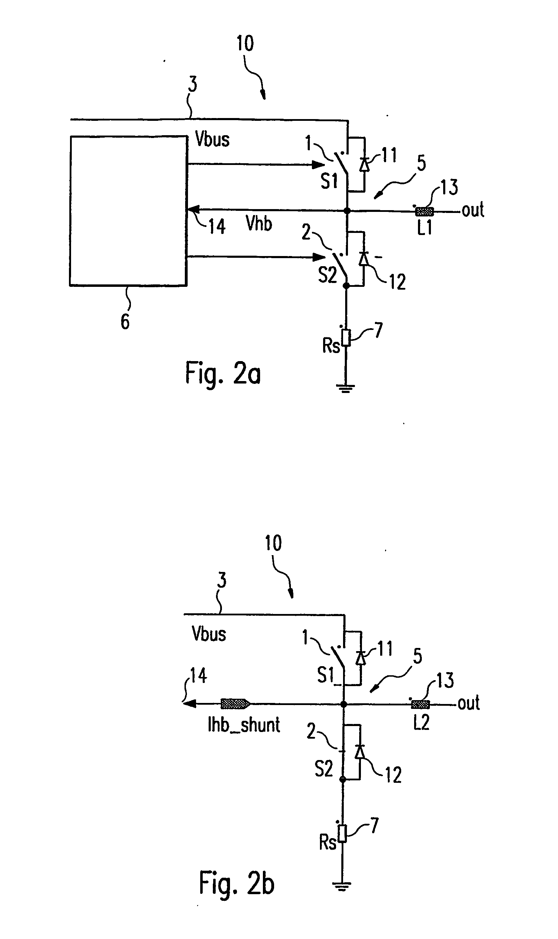

Fig. 2a und 2b zeigt ein zweites nicht beanspruchtes Beispiel der Erfindung, bei dem die überwachte Schaltung insofern vereinfacht ist, als das Meßsignal direkt an dem Mittenpunkt 4 abgegriffen wird. Wiederum erfolgt wie in Fig. 2a ersichtlich die Messung der Mittenpunktspannung während der Totzeit, während der also beide Schalter 1, 2 geöffnet sind und die Messung des Stroms durch die Halbbrücke während der zeitlichen Dauer der Taktung der Schalter 1, 2 während der der potentialniedrigere Schalter 2 geschlossen ist. Dies Beispiel unterscheidet sich vom Stand der Technik durch den Messwiderstand 7 zwischen potentialniedrigerem Schalter 2 und Masse.

Die Vereinfachung der Schaltung gemäß Figuren 2a und 2b gegenüber der Schaltung gemäß Figuren 1a, 1b stellt dabei einen Kompromiß dahingehend dar, dass der Schalterwiderstand des Schalters S2 (Resist_{On}) nur sehr grob bekannt ist, so dass die Strommessung in dem Zustand von Fig. 2b verhältnismäßig ungenau ist. Indessen ist die Genauigkeit bei entsprechender Einstellung eines Schwellenwerts in der Steuerschaltung 6 ausreichend, um eine Sicherheitsabschaltung im Falle einer Überstromerkennung in der Halbbrücke zu veranlassen.

Alternativ kann der Schalter S2 auch als integrierte Schaltung ausgebildet sein, wobei in diesem Fall der Schaltwiderstand im geschlossenen Zustand (Resistₒₙ) verhältnismäßig genau definiert ist und somit auch die Strommessung im Beispiel von Fig. 2b genauer erfolgen kann.

Die Erfassung des Halbbrückenstroms kann indessen nicht nur zu einer Sicherheitsabschaltung für den Fall der Erfassung eines Überstromzustands, sondern auch als zumindest ein Parameter einer Lampenleistungsregelung dienen.

Gemäß der Erfindung kann also die Pin-Anzahl des Steuer-ICs 6 gering gehalten werden, da ein Meßkonzept vorgeschlagen wird, dass schaltungstechnisch die Erfassung der Mittenpunktspannung mit der Überstromdetektion in der Halbbrücke kombiniert.

Da die Mittenpunkspannung immer bestimmt wird, bevor der entsprechende Transistor eingeschaltet wird und andererseits stets eine Totzeit vorhanden ist, wird im stromlosen Zustand gemessen, was eine additive Überlagerung von Halbbrückenstrom und Mittenpunktspannungserfassung ermöglicht.

## Patentansprüche

1. Wechselrichter mit einer Halbbrückenschaltung, aufweisend:
- zwei in Serie geschaltete und mit Gleichspannung (3) versorgte Schalter (1, 2), an deren Mittenpunkt (4) bei gegenläufiger Taktung der Schalter (1, 2) eine Wechselspannung bereitgestellt wird, und
- eine Steuereinheit (6), die die Schalter (1, 2) taktet und ein an dem Mittenpunkt (4) abgegriffenes Messignal in unterschiedlichen zeitlichen Phasen der Taktung der Schalter (1, 2) zur Erfassung des Stroms durch die Halbbrücke (5) bzw. der Spannung an dem Mittenpunkt (4) auswertet,
**dadurch gekennzeichnet, dass**
der potentialniedrigere Schalter (2) mittels eines Ohm'schen Messwiderstands (7) mit Masse verbunden ist, dessen Widerstandswert wesentlich kleiner als der Widerstand des potentialniedrigeren Schalters (2) im geschlossenen Zustand ist und
ein weiterer ohm'scher Widerstand (8) parallel zu dem potentialniedrigeren Schalter (2) geschaltet ist, und das Mittenpunktsignal an einem Punkt zwischen dem Messwiderstand (7) und dem potentialniedrigeren Schalter (2) abgegriffen wird.

2. Wechselrichter nach Anspruch 1,
**dadurch gekennzeichnet,**
**dass** die Steuereinheit (6) das Mittenpunktsignal als Strom durch die Halbbrücke (5) auswertet, wenn nur der auf niedrigerem Potential liegende Schalter (1) geschlossen ist.

3. Wechselrichter nach einem der vorhergehenden Ansprüche, **dadurch gekennzeichnet,**
**dass** die Steuereinheit (6) das Mittenpunktsignal als Spannungswert des Mittenpunkts (4) in einer Phase auswertet, in der wenigstens der auf niedrigerem Potential liegende Schalter (2) geöffnet ist.

4. Wechselrichter nach Anspruch 3,
**dadurch gekennzeichnet,**
**dass** die Steuereinheit (6) das Mittenpunktsignal als Spannungswert des Mittenpunkts in einer Totzeit auswertet, in der beide Schalter (1, 2) geöffnet sind.

5. Wechselrichter nach Anspruch 4,
**dadurch gekennzeichnet,**
**dass** die Totzeit abhängig von der erfassten Mittenpunktspannung variierbar ist.

6. Wechselrichter nach Anspruch 1,
**gekennzeichnet durch**
einen Komparator (9) zum Vergleich des Messignals mit einer Referenzspannung.

7. Wechselrichter nach einem der vorhergehenden Ansprüche, **dadurch gekennzeichnet,**
**dass** die Steuereinheit ein ASIC ist.

8. Wechselrichter nach einem der vorhergehenden Ansprüche, **dadurch gekennzeichnet,**
**dass** die Steuereinheit einen Schalter erst dann einschaltet, wenn die Erfassung der Mittenpunktspannung ergeben hat, dass die Freilaufphase des Halbbrückenstroms beendet ist und somit ein spannungsloser Schaltvorgang gewährleistet ist.

9. Elektronisches Vorschaltgerät für Gasentladungslampen, aufweisend einen Wechselrichter (10) nach einem der vorhergehenden Ansprüche.

10. Verfahren zur Überwachung des Zustands eines Wechelrichters mit einer Halbbrückenschaltung, die zwei in Serie geschaltete und mit Gleichspannung (3) versorgte Schalter (1, 2) aufweist, an deren Mittenpunkt (4) bei entsprechender gegenläufiger Taktung der Schalter (1, 2) eine Wechselspannung bereitgestellt wird,
wobei ein an dem Mittenpunkt (4) abgegriffenes Messignal in unterschiedlichen zeitlichen Phasen der Taktung der Schalter (1, 2) zur Erfassung des Stroms durch die Halbbrücke (5) bzw. der Spannung an dem Mittenpunkt (4) ausgewertet wird, wobei
der potentialniedrigere Schalter (2) mittels eines Ohm'schen Messwiderstands (7) mit Masse verbunden ist, dessen Widerstandswert wesentlich kleiner als der Schalterwiderstand im geschlossenen Zustand ist, und ein weiterer Ohm'scher Widerstand (8) parallel zu dem potentialniedrigeren Schalter (2) geschaltet ist,
und das Mittenpunktsignal an einem Punkt zwischen dem Messwiderstand (7) und dem potentialniedrigeren Schalter (2) abgriffen wird.

11. Verfahren nach Anspruch 10,
**dadurch gekennzeichnet,**
**dass** das Mittenpunktsignal als Strom durch die Halbbrücke (5) ausgewertet wird, wenn nur der auf niedrigerem Potential liegende Schalter (1) geschlossen ist.

12. Verfahren nach einem der Ansprüche 10 oder 11,
**dadurch gekennzeichnet,**
**dass** das Mittenpunktsignal als Spannungswert des Mittenpunkts (4) in einer Phase ausgewertet wird, in der wenigstens der auf niedrigerem Potential liegende Schalter (2) geöffnet ist.

13. Verfahren nach einem der Ansprüche 10 bis 12,
**dadurch gekennzeichnet,**
**dass** das Mittenpunktsignal als Spannungswert des Mittenpunkts in einer Totzeit ausgewertet wird, in der beide Schalter (1, 2) geöffnet sind.

14. Verfahren nach Anspruch 13,
**dadurch gekennzeichnet,**
**dass** die Totzeit abhängig von der erfassten Mittenpunktspannung variiert wird.

15. Verfahren nach Anspruch 10,
**dadurch gekennzeichnet**
**dass** das Messignal mit einer Referenzspannung verglichen wird.

16. Verfahren nach einem der Ansprüche 10 bis 15,
**dadurch gekennzeichnet,**
**dass** die Spannung an dem Mittenpunkt zur Sicherstellung spannungsloser Schaltvorgänge der Schalter (1, 2) ausgewertet wird.

17. Verfahren nach Anspruch 16,
**dadurch gekennzeichnet,**
**dass** ein Schalter (1, 2) erst dann geschlossen wird, wenn die Erfassung der Mittenpunktspannung ergeben hat, dass die Freilaufphase des Halbbrückenstroms beendet
ist.

18. Computersoftware-Programmprodukt,
**dadurch gekennzeichnet,**
**dass** es ein Verfahren nach einem der Ansprüche 10 bis 17 unterstützt, wenn es durch einen Microcomputer ausgeführt wird.

## Claims

1. Inverter with a half-bridge circuit, having:
- two switches (1, 2) which are connected in series, are supplied with DC voltage (3) and at the centre point (4) of which an AC voltage is provided during opposed clocking of the switches (1, 2), and
- a control unit (6) which clocks the switches (1, 2) and evaluates a measurement signal tapped off at the centre point (4) in different temporal phases of the clocking of the switches (1, 2) in order to detect the current through the half-bridge (5) or the voltage at the centre point (4), **characterized in that**
the lower-potential switch (2) is connected to earth by means of a non-reactive measuring resistor (7), the resistance value of which is considerably smaller than the resistance of the lower-potential switch (2) in the closed state, and
a further non-reactive resistor (8) is connected in parallel with the lower-potential switch (2), and
the centre point signal is tapped off at a point between the measuring resistor (7) and the lower-potential switch (2).

2. Inverter according to Claim 1,
**characterized in that**
the control unit (6) evaluates the centre point signal as the current through the half-bridge (5) when only the switch (2) at the lower potential is closed.

3. Inverter according to one of the preceding claims, **characterized in that**
the control unit (6) evaluates the centre point signal as a voltage value of the centre point (4) in a phase in which at least the switch (2) at the lower potential is open.

4. Inverter according to Claim 3,
**characterized in that**
the control unit (6) evaluates the centre point signal as a voltage value of the centre point in a dead time in which both switches (1, 2) are open.

5. Inverter according to Claim 4,
**characterized in that**
the dead time can be varied on the basis of the detected centre point voltage.

6. Inverter according to Claim 1,
**characterized by**
a comparator (9) for comparing the measurement signal with a reference voltage.

7. Inverter according to one of the preceding claims, **characterized in that**
the control unit is an ASIC.

8. Inverter according to one of the preceding claims, **characterized in that**
the control unit switches on a switch only when the detection of the centre point voltage has revealed that the freewheeling phase of the half-bridge current has ended and a voltage-free switching operation is thus ensured.

9. Electronic ballast for gas discharge lamps, having an inverter (10) according to one of the preceding claims.

10. Method for monitoring the state of an inverter with a half-bridge circuit having two switches (1, 2) which are connected in series, are supplied with DC voltage (3) and at the centre point (4) of which an AC voltage is provided during corresponding opposed clocking of the switches (1, 2),
a measurement signal tapped off at the centre point (4) being evaluated in different temporal phases of the clocking of the switches (1, 2) in order to detect the current through the half-bridge (5) or the voltage at the centre point (4), the lower-potential switch (2) being connected to earth by means of a non-reactive measuring resistor (7), the resistance value of which is considerably smaller than the switch resistance in the closed state, and a further non-reactive resistor (8) being connected in parallel with the lower-potential switch (2), and
the centre point signal being tapped off at a point between the measuring resistor (7) and the lower-potential switch (2).

11. Method according to Claim 10,
**characterized in that**
the centre point signal is evaluated as the current through the half-bridge (5) when only the switch (2) at the lower potential is closed.

12. Method according to either of Claims 10 and 11, **characterized in that**
the centre point signal is evaluated as a voltage value of the centre point (4) in a phase in which at least the switch (2) at the lower potential is open.

13. Method according to one of Claims 10 to 12, **characterized in that**
the centre point signal is evaluated as a voltage value of the centre point in a dead time in which both switches (1, 2) are open.

14. Method according to Claim 13,
**characterized in that**
the dead time can be varied on the basis of the detected centre point voltage.

15. Method according to Claim 10,
**characterized in that**
the measurement signal is compared with a reference voltage.

16. Method according to one of Claims 10 to 15, **characterized in that**
the voltage at the centre point is evaluated in order to ensure voltage-free switching operations of the switches (1, 2).

17. Method according to Claim 16,
**characterized in that**
a switch (1, 2) is closed only when the detection of the centre point voltage has revealed that the freewheeling phase of the half-bridge current has ended.

18. Computer software program product, **characterized in that**
it supports a method according to one of Claims 10 to 17 when executed by a microcomputer.

## Revendications

1. Onduleur pourvu d'un circuit en demi-pont et présentant :
- deux commutateurs (1, 2) montés en série et alimentés en tension continue (3), une tension alternative étant mise à disposition en leur point central (4) en cas de cadencement opposée des commutateurs (1, 2), et
- une unité de commande (6), qui cadence les commutateurs (1, 2) et évalue un signal de mesure prélevé au point central (4) dans différentes phases temporelles du cadencement des commutateurs (1, 2) pour détecter le courant à travers le demi-pont (5) ou la tension au point central (4),
**caractérisé en ce que**
le commutateur de potentiel inférieur (2) est relié à la masse au moyen d'une résistance ohmique de mesure (7), dont la valeur de résistance est très inférieure à la résistance du commutateur de potentiel inférieur (2) dans l'état fermé et
une autre résistance ohmique (8) est connectée en parallèle du commutateur de potentiel inférieur (2), et
le signal du point central est prélevé en un point situé entre la résistance de mesure (7) et le commutateur de potentiel inférieur (2).

2. Onduleur selon la revendication 1,
**caractérisé en ce que**
l'unité de commande (6) évalue le signal du point central comme étant le courant à travers le demi-pont (5), lorsque seul le commutateur (1) situé à un potentiel inférieur est fermé.

3. Onduleur selon l'une des revendications précédentes,
**caractérisé en ce que**
dans une phase dans laquelle au moins le commutateur (2) situé à un potentiel inférieur est ouvert, l'unité de commande (6) évalue le signal du point central comme étant la valeur de tension du point central (4).

4. Onduleur selon la revendication 3,
**caractérisé en ce que**
dans un temps mort dans lequel les deux commutateurs (1, 2) sont ouverts, l'unité de commande (6) évalue le signal du point central comme étant la valeur de tension du point central.

5. Onduleur selon la revendication 4,
**caractérisé en ce que**
le temps mort est susceptible d'être modifié en fonction de la tension du point central détectée.

6. Onduleur selon la revendication 1,
**caractérisé par** un comparateur (9) destiné à comparer le signal de mesure avec une tension de référence.

7. Onduleur selon l'une des revendications précédentes,
**caractérisé en ce que**
l'unité de commande est un ASIC.

8. Onduleur selon l'une des revendications précédentes,
**caractérisé en ce que**
l'unité de commande met en circuit un commutateur seulement lorsqu'il résulte de la détection de la tension du point central que la phase de roue libre du courant de demi-pont est terminée et qu'ainsi un processus de commutation à tension nulle est garanti.

9. Ballast électronique pour lampes à décharge de gaz, présentant un onduleur (10) selon l'une des revendications précédentes.

10. Procédé destiné à contrôler l'état d'un onduleur pourvu d'un circuit en demi-pont, qui présente deux commutateurs (1, 2) montés en série et alimentés en tension continue (3), une tension alternative étant mise à disposition en leur point central (4) en cas de cadencement opposé correspondant des commutateurs (1, 2),
dans lequel un signal de mesure prélevé au point central (4) est évalué dans différentes phases temporelles du cadencement des commutateurs (1, 2) pour détecter le courant à travers le demi-pont (5) ou la tension au point central (4),
dans lequel le commutateur de potentiel inférieur (2) est relié à la masse au moyen d'une résistance ohmique de mesure (7), dont la valeur de résistance est très inférieure à la résistance du commutateur dans l'état fermé, et une autre résistance ohmique (8) est connectée en parallèle du commutateur de potentiel inférieur (2),
et le signal du point central est prélevé en un point situé entre la résistance de mesure (7) et le commutateur de potentiel inférieur (2).

11. Procédé selon la revendication 10,
**caractérisé en ce que**
le signal du point central est évalué comme étant le courant à travers le demi-pont (5) lorsque seul le commutateur (1) situé au potentiel inférieur est fermé.

12. Procédé selon l'une des revendications 10 ou 11,
**caractérisé en ce que**
le signal du point central est évalué comme étant la valeur de tension du point central (4) dans une phase, dans laquelle au moins le commutateur (2) situé au potentiel inférieur est ouvert.

13. Procédé selon l'une des revendications 10 à 12,
**caractérisé en ce que**
le signal du point central est évalué comme valeur de tension du point central dans un temps mort, dans lequel les deux commutateurs (1, 2) sont ouverts.

14. Procédé selon la revendication 13,
**caractérisé en ce que**
le temps mort est susceptible d'être modifié en fonction de la tension du point central détectée.

15. Procédé selon la revendication 10,
**caractérisé en ce que**
le signal de mesure est comparé à une tension de référence.

16. Procédé selon l'une des revendications 10 à 15,
**caractérisé en ce que**
la tension au point central est évalué pour assurer des processus de commutation à tension nulle des commutateurs (1, 2).

17. Procédé selon la revendication 16,
**caractérisé en ce qu'**un commutateur (1, 2) est fermé seulement lorsqu'il résulte de la détection de la tension du point central que la phase de roue libre du courant de demi-pont est terminée.

18. Produit programme d'ordinateur,
**caractérisé en ce qu'**il soutient un procédé selon l'une des revendications 10 à 17, lorsqu'il est exécuté par un micro-ordinateur.
